# EUROPEAN PATENT SPECIFICATION

(11) **EP 0 311 363 B1**
(45) Date of publication and mention of the grant of the patent: **31.03.1993**
(21) Application number: 88309254.6
(22) Date of filing: 05.10.1988
(51) Int. Cl.: E02D 5/56, E02D 7/22, E21B 7/20, B23K 5/18

(54) **Hollow steel pile, manufacturing method and pile driving method**
Hohler Stahlpfahl, Erzeugungsmethode und Methode zum Einrammen eines Pfahles
Pieu creux en acier, méthode de fabrication et méthode pour enfoncer un pieu

(30) Priority: 05.10.1987 JP 251381/87; 13.11.1987 JP 286855/87; 30.11.1987 JP 302492/87; 04.03.1988 JP 50715/88
(43) Date of publication of application: 12.04.1989
(73) Proprietor: KAWASAKI STEEL CORPORATION, Kobe-shi Hyogo-ken 651 (JP)
(72) Inventor: Tateno, Jiro c/o Tokyo Main Office, Chiyoda-Ku Tokyo (JP); Hashimoto, Masaharu c/o Tokyo Main Office, Chiyoda-Ku Tokyo (JP); Satou, Seiji c/o Tokyo Main Office, Chiyoda-Ku Tokyo (JP)
(74) Representative: Overbury, Richard Douglas

(56) References cited:
- EP-A- 0 228 138
- FR-A- 2 516 958
- FR-A- 2 566 813
- GB-A- 1 391 110
- US-A- 3 842 608

## Description

This invention relates to a hollow steel pile.

As an initial bearing pile, it is well known to provide a precast pile of prestressed concrete or reinforced concrete of the monkey direct driving type. Insertion of the pile requires a large-sized machine which may have a substantial influence on the surrounding neighborhood because of noise and vibration. For this reason, such machines are sometimes not allowed to enter housing land, resulting in increased costs.

The use of hollow steel piles having open ends can eliminate the above-mentioned disadvantages completely. The hollow steel piles are settled in the ground through a rotary press-in method. The hollow steel piles are provided with saw-teeth or with a cutting tool at their extremities and are held at their heads in a rotary device and screwed into the ground through its rotational force.

A hollow steel pile having open ends and having at its extremity and at an intermediate part some excavation screw vanes at its outer periphery or inner periphery has already been proposed in Japanese Patent Laid-Open No. 62-86224 as a foundation pile capable of being inserted by screwing in the above-mentioned manner.

In the disclosure the screw vanes are provided at the extremity of the hollow steel pile as well as on the circumferential surface of the intermediate part, the pile is held at its head by the rotary device and is settled into the ground by the weight of the device and the rotary pulling action of the screw vanes. Further, the peripheral surface of the main body of the pile is formed with one or a plurality of helical bands to cause the bearing area of the pile to be increased. The ground around the pile is pressed by the helical bands, so that the bearing force for the pile is increased and the stability of the pile is improved.

In the above-described arrangement, the following disadvantages are found in its practical operation.
i) When the pile is rotated with the excavation vanes arranged at the inner circumference and the outer circumference of the pile, the pile excavates the stratum and advances in it due to its own weight and penetrates into the ground automatically like a screw nail. However, it exhibits a certain problem in realizing the bearing force after its penetration into the ground. That is, the above-mentioned excavation vanes are designed to have a plate-like form and a wide width just like a cutting blade because of excavating capability considerations so that a speedy excavation of the stratum can be realized even though the outer and inner surface soil on the pile is peeled off and discharged. Such a soil discharging action is quite important not only because of the problem of requiring its processing but also because of the rough or close condensation of the stratum bearing the pile. A substantial number of days is required for the disturbed stratum to recover its density and it has been shown that a substantial time is required for recovering the frictional force at the circumferential surface for realizing the bearing force. Otherwise a sufficient bearing force can not be attained.
ii) As described above, manufacturing and fixing of the excavation vanes in the form of wide plates so as to enable a desired strength to be attained may involve quite a high cost.
iii) Arranging the excavation vanes at an intermediate part of the pile is envisaged even though they may act to prevent negative friction and so pile strength becomes a problem.

An actual survey has shown that a monkey direct driving pile is acknowledged to have an excessive bearing force caused by an elapse of time, although in the case of a rotary press-in pile, the increase of the bearing force with time is not acknowledged. This is due to the fact that the friction force between the ground and the main body of the pile is reduced by the cutting blades projecting from the peripheral surface of the pile which are applied with a view to executing the piling work with low noise, low vibration and high speed operation. A substantial number of days is required for the disturbed ground to recover.

As another way of accommodating the above-mentioned bearing force and performing the pile insertion speedily and with lower noise and vibration, there is provided an internal excavation method which can be applied to hollow steel piles.

This internal excavation process is applied to stratum having an intermediate sand layer having a relative high N-value until the pile reaches the bearing stratum. The pile to be used in this process is limited to one having a hollow circular section in view of the fact that a helical auger is inserted into the hollow pile and the pile is settled down into the desired depth by its own weight and a press-in device while the excavated soil is discharged from the pile head through the hollow part of the pile. After the pile has reached the desired depth, the pile penetrates into the bearing layer so as to realize the bearing force. As the bearing force realizing process, there are three types viz:-
1. a pile driving process,
2. a consolidation of the foundation, and
3. enlarged consolidation of the foundation.

The pile driving method has the problem of noise and vibration and consolidation of the foundation has the problem that the extremity end bearing force is lower than that for a driven pile. More particularly in the case of a hollow steel pile, the sectional area of the pile itself is small and the adhesion of the consolidation concrete to the pile wall becomes insufficient due to the presence of the excavated soil adhered to the inner surface of the pile. This results in difficulty in realizing the bearing force. A method ameliorating this disadvantage is the enlarged consolidation foundation method. However, in this case a special auger head is used and this requires a bottom enlargement excavation process. It further has the disadvantages that slime from the lower part of the consolidation concrete of the foundation can not be removed completely and that much time is required to set the concrete.

Since the hollow steel pile has open ends, soil enters within the pile. The amount of soil entering the pile is limited by the frictional resistance between the inner wall of the pile and the soil which restricts the penetration speed of the pile. Although a frictional resistance between a certain length of the inner wall of the pile (in general less than about 2 times the diameter) and the in-pile soil effectively contributes to the bearing force near the extremity of the pile, at greater lengths the frictional resistance between the inner wall of the pile and the in-pile soil resists penetration and reduces the pile penetration speed. To promote the penetration speed, a helical rib is provided at the inner circumference of the extremity end of the pile. Means for carrying out an automatic operation to fix such an inner rib inside a pipe is proposed in Japanese Utility Model Publication No. 53-240492 and Japanese Patent Laid-Open No. 51-107262 or the like in which the inner rib is welded to a flat steel plate in advance and then the flat plate is rolled into a plate-rolled pipe.

It is an object of the present invention to provide a hollow steel pile which can be inserted cleanly under proper penetration torque and which presents a substantial bearing force.

Another object of the present invention, is to provide a steel pipe pile where the foundation can be sufficiently consolidated against the bearing stratum by the screwing operation of the inner wall whilst generating friction between the soil column in the pipe, kept at a proper consolidated state, and the inner wall whereby a higher bearing force can be attained even though the pile can be installed in a simple and easy manner.

It is a further object of the present invention to provide an easy and economical means for automatically and mechanically fixing an inner helical projection at the extremity of an already-formed steel pile even if the pile is of small diameter.

According to one aspect of the present invention there is provided a hollow steel pile having open ends and including a helical projection formed of a round or rectangular rod member arranged as a helical band on the outer surface of the pile characterised in that the projection has a height of 20mm or less and is provided only over a part of the pile which is less than 10 times the outer diameter of the pile from the pile extremity.

In an embodiment, the inner diameter of a desired length of the pile at the extremity is reduced whereby the wall thickness of the pile along that length is slightly increased.

In an embodiment, the pile includes a helical projection on the inner surface of the pile, the projection having a height of less than 20 mm and being formed of a round or rectangular rod member. In this case the projection on the inner surface can be provided by a method which comprises mounting a hollow steel pipe so as to be rotatable about its longitudinal axis, inserting and temporarily fixing the rod member preformed in a helical shape into the pipe at the extremity thereof, rotating the pipe while pressing said rod member against the inner surface of the pipe, advancing a welding torch along the helical rod member and welding the helical rod member to said inner surface to form said helical projection.

This method may be carried out using a device comprising a guide bar for insertion along the axis of the steel pipe, a base frame guided by, and axially displaceable along, said guide bar, a plurality of legs extending from said base frame and axially spaced by a distance corresponding to the helical pitch of the rod member, a grooved roller located at the end of each leg for engaging with the rod member and urging it against the inner surface of the pipe, a welding torch adjacent the preceding roller and directed toward the inner surface of the pipe, and a pressing roller extending from said base frame and abutting against the inner surface of the pipe to press the grooved roller against the rod member to urge it against the inner surface of the pipe.

Another aspect of the present invention provides a pile driving method for the hollow steel pile which comprises pressing the pile down to a bearing stratum layer and screwing it into the bearing layer.

In another aspect of the present invention, a pile driving method is provided wherein a helical auger is inserted into the interior of the hollow pile, the pile is pressed down to the bearing stratum layer while the soil is discharged by the auger, and then the pile is screwed into the bearing layer.

For a better understanding of the invention and to show how the same may be carried into effect, reference will now be made, by way of example, to the accompanying drawings, in which:-
Fig. 1 is a view of a hollow steel pile constructed in accordance with the present invention,
Fig. 2 is an enlarged detail view of the extremity of the hollow steel pile of Figure 1,
Fig. 3 is a diagrammatic view showing the penetration mechanism of soil into the pile of Figures 1 and 2,
Fig. 4a is a longitudinal section through a hollow steel pile not constructed according to the present invention,
Fig. 4b is a section corresponding to Figure 4a but through a hollow steel pipe constructed in accordance with the present invention,
Fig. 5 is a diagram showing the relationship between the penetration torque and the wall thickness of a hollow steel pile,
Fig. 6 is a diagram showing the relationship between the penetration speed and the projection height of a pile,
Figs. 7a and 7b are illustrative views showing the insertion of a hollow steel pile of the present invention,
Fig. 8 is a diagrammatic view for showing the penetration mechanism of soil into the pile of Figs. 7a and 7b,
Figs. 9(i) to (vi) are illustrative views showing successive stages in the insertion of the pile of Figs. 7a and 7b,
Fig. 10a is an illustrative view showing a helical projection-forming device for use in producing a pile of the present invention, and
Fig. 10b is a view of the device of Fig. 10a taken along line b-b.

A first preferred embodiment of the present invention is a hollow steel pile having a helical projection of 20 mm or less in height on the outer circumference over a length which is less than 10 times the outer diameter of the pile from the pile extremity. When the rotary press-in operation is to be carried out, the soil at the surface of the circumference of the pile is not peeled off and discharged in contrast to piles having conventional excavation vanes. The surface soil broken by the helical projection is accumulated without being moved at all and a clean press-in operation without any discharging of soil is carried out with a depressing action of the soil against the circumferential surface of the pile. A substantial reduction of the disturbance of the stratum enables a reduction of the circumferential surface frictional force recovering time to be achieved and a sufficient bearing force can be attained. Penetration of soil into the pile is promoted without disturbing the surface soil at the inner wall of the pile. The penetration speed is increased and at the same time the inner frictional surface force is increased and a high extremity bearing force can be realized.

Referring now the drawings, this embodiment of the present invention will be described in detail.

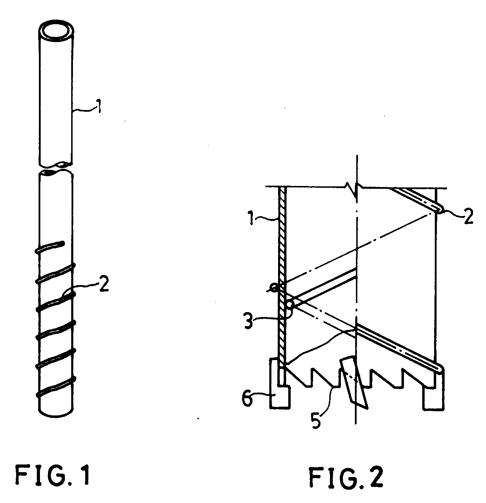

In Fig. 1, reference numeral 1 indicates a hollow steel pile having open ends and a helical projection 2 composed of a round or rectangular rod member with a projection height of 20 mm or less is welded in the form of a helical band to the outer circumference of the extremity of the pile over a length of less than 10 times the outer pile diameter.

The length of the helical projection 2 is preferably short as an excessive length may cause the torque required for performing the rotary press-in operation to increase uselessly and delay the penetration time. Further it may increase the degree of disturbance of the ground which would then require a long period of time for recovering the frictional force at its circumferential surface.

However, too short a length for the projection may not provide enough excavation function or sufficient circumferential friction.

The above-described range of dimensions has been determined by means of various experiments and studies. As regards the above-mentioned projection height, the fact that the pile bearing force is substantially influenced by the height of the projection as well as the frictional resistance force recovering time after penetration has been confirmed by loading tests which show that the greater the projection height, the better the result.

However, the torque when the pile is penetrated is excessively increased if the projection height is too great.

As a result of performing various experiments and studies on the projection heights which enable effective bearing forces to be attained without substantially increasing the torque when the pile is inserted, the above-described height has been determined.

In a sand layer, the frictional surface is the outer circumferential surface of the pile and even a small projection height can result in the screwing effect. Thus a small projection height is satisfactory and this enables the discharge of soil to be eliminated.

Although the most important feature of the pile of the invention resides in the use of a helical projection formed of round or rectangular rod it is advantageous economically if the projection, of desired strength, can be provided by means of simple welding work. As a consequence, in order to obtain a hollow steel pile for use in rotary press-in work which is effective in its realization of workability and bearing force, the helical projection 2 is provided only adjacent the extremity and its height is limited.

As shown in Fig. 2, it is effective also to provide a helical projection 3 within the pile in the case where the pile is to be penetrated into a hard stratum with the result that the penetration time is extended. The thrust force generated by the in-pile projection can shorten the penetration time. In addition, after penetration, the inner projection 3 may increase the frictional resistance force with respect to the soil within the pile and provide a bearing force at the extremity of the pile.

In-pile screw projection 3 is required to be attached over a length more than at least two times the outer diameter to increase the load at the side wall of the extremity of the pile and over a length more than five times the outer diameter in order to realize the screw effect. Further, the helical shape and the pitch of the helical line and its length are not necessarily the same as those of the projection on the outer circumference. The selection of these features may influence the penetration speed and torque.

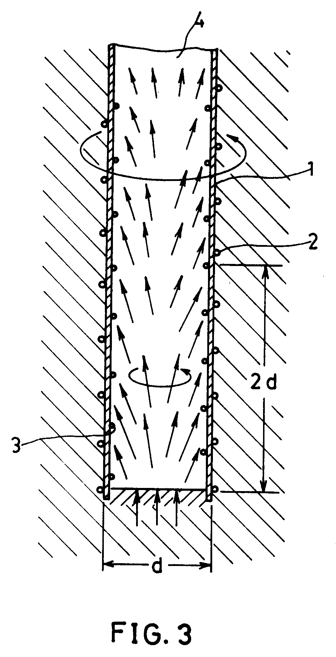

As shown in Fig. 3, the penetrated soil 4 in the pile 1 exhibits a sliding action at the extremity of the pile and the in-pile soil 4 can accept the transmittance of torque from the extremity. Thus a relative speed is generated between the pile 1 and the in-pile soil 4 and the soil penetrates into the pile while being rotated. The in-pile soil column 4 is rotated and thus the frictional resistance at the inner surface of the pile is reduced. The soil is pushed up by the screw thrust and the load generated at the extremity as the soil is rotated.

In addition, and as shown in Fig. 2, if the extremity of the pile 1 is in the form of a saw-tooth 5 or is provided with a cutting bit 6 for excavating a width corresponding to the value obtained by adding the heights of projections 2 and 3 and the pipe wall thickness, the penetrating efficiency is improved even more.

In an example, there was provided a hollow pile having a diameter of 300 ⌀ and helical projections of a pitch 300 mm and height 13 mm at both the inner and outer surfaces of the terminal 3m of the pile. The pile was penetrated down to a depth of 21 m at the stratum with a N-value of 50 in about 60 minutes. No discharging soil was observed at all.

In a vertical loading test, a desired withstand load was attained. The effect attained by the inner screw-like projection of the pile was as shown in the following table. The penetration speed at the stratum with an N-value of 30 is expressed as the amount of penetration per one rotation of the pile.

| Penetration Speed | Inner screw present | Inner screw not present |
|---|---|---|
| Sand Layer N = 30 | 33.2 mm/r | 25.5 mm/r |
| Clay Layer N = 10 | 52.0 | 43.3 |

As described above, the effect of the inner projection is particularly marked at the sand layer requiring a long penetration time and it enables the total penetration time to be reduced.

A second preferred embodiment of the present invention is a hollow steel pile having a reduced open end. The extremity bearing force is maintained and the extremity frictional force is increased by a small amount. The soil entering at the small diameter part of the pile is loosely passed to the large inner diameter part whereby the inner wall friction of the penetrated soil is reduced and penetration of the pile is improved enabling the screwing torque to be reduced.

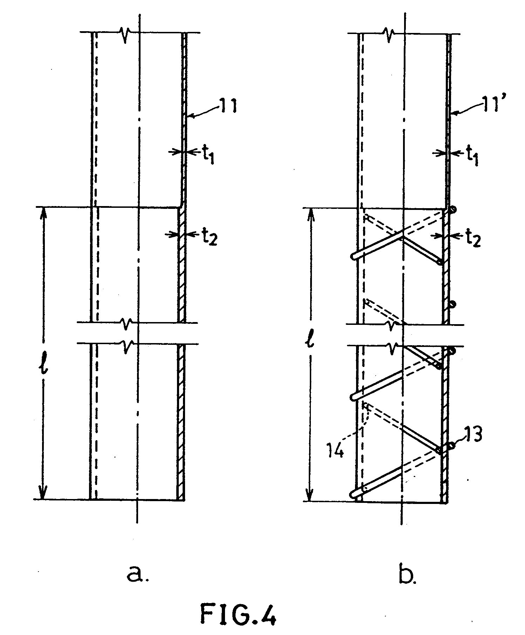

In the case of the hollow steel piles 11 (Fig. 4a) and 11' (Fig. 4b), as shown in the drawings, the inner diameter size of a desired length ℓ at the extremity is made small and the pile wall thickness t₂, only at this portion, is made slightly thicker than the pile wall thickness t₁ at other portions.

In the case of the system shown in the figures, the penetrated soil in the pile is cut to a smaller diameter than in conventional systems which do not have a reduced open end and the inner wall friction of the penetrated soil is reduced and thereby the torque needed is also reduced.

As a result of penetration tests, it has been found that the maximum torque for a pile in accordance with this second embodiment of the present invention is substantially lower than that of a pile of conventional shape. A test result on a pile having a diameter of 300 ⌀ is indicated in the following table.

| Comparison of Maximum Torque | | |
|---|---|---|
| Pile of the Present Invention | t₁ < t₂ | T = 8^{t-m} |
| Conventional Pile | t₁ = t₂ | T = 10^{t-m} |

It has been confirmed that the presence of a reduced inner diameter at the extremity causes the frictional resistance force at the extremity to be increased and load tests show that such a pile exhibits a sufficient bearing force.

In Fig. 4b, the hollow steel pile 11' has a helical projection 13 composed of round rod or rectangular rod having a height of 20 mm or less which is welded at the outer circumference of the extremity of the pile over a length which is less than ten times the outer diameter of the pile.

As in the case of the embodiment shown in Figure 1, if the length of the projection 13 is too long, the torque needed for performing a rotary press-in operation is increased uselessly with consequent increase of the penetration time and increase in the degree to which the stratum is disturbed. Also, a longer period of time for recovering the frictional resistance force at the circumferential surface is required. Thus a shorter length is preferable.

However, too short a length may not provide sufficient excavation capability and resistance force at the circumferential surface.

Similarly, it has been confirmed from load tests that the bearing force of the pile is substantially influenced by the projection height in view of the frictional resistance force recovering time after penetration. Further it has been found that the higher the projection height, the better the bearing force.

However, when the pile is penetrated the torque needed becomes excessively high. As a result, when the pile is to be inserted by the rotary press-in process, the helical projection 13 is limited to the part of the pile adjacent the extremity of the pile and also its height is limited in the interests of effectiveness and economy and attainment of the desired bearing force.

In the case where the pile is to be penetrated into a hard stratum and its penetration time is extended, it is effective to provide helical projection 14 inside the pile so that the resultant in-pile screw thrusting force may reduce the penetrating time. In addition, after penetration, the projection 14 may increase the frictional resistance force against the soil in the pile and provide a bearing force at the extremity of the pile.

The in-pile screw projection 14 is provided over a length of the pile, at the extremity, which is at least more than two times the outer diameter whereby the load at the extremity may act to increase the load at the side wall of the extremity and, in order to realize the effect of the screw, the projection 14 should be provided over a length which is more than five times of the outer diameter. The shape of the helical projection and its pitch and length may not necessarily be the same as in the case of the outer projection 13 although their selection may influence the penetration speed and torque.

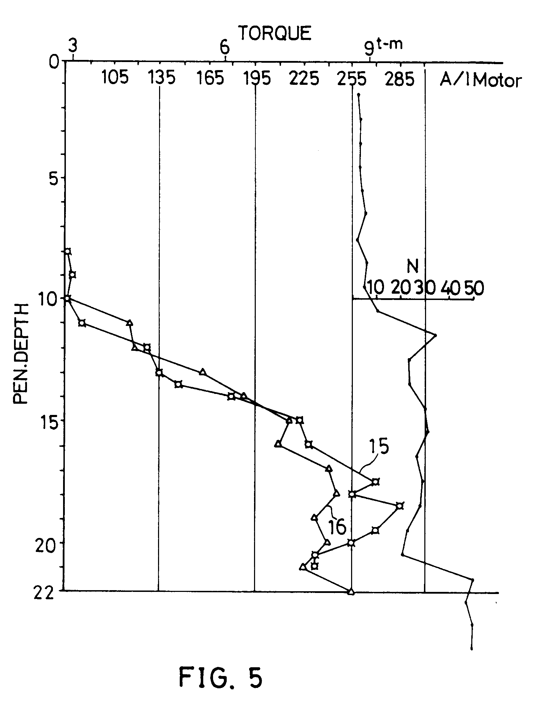

Fig. 5 illustrates the different penetration torque associated with piles having projections 13 and 14 where one pile has a pile wall at the extremity which is slightly thick in accordance with the second embodiment of the present invention and the other pile has a constant pile wall thickness.

The line 15 in Fig. 5 refers to a hollow steel pile in which the projection 13 has a pitch of 300 mm and a length of 3,000 mm and is arranged at the outer circumference of the pile extremity and the projection 14 has a pitch of 300 mm and a length of 3,000 mm and is arranged at the inner circumference of the pile extremity. This pile has a constant wall thickness. The line 16 indicates a pile in accordance with the second embodiment of the present invention. This pile has identical projections 13 and 14 as described above but has, at its extremity, a smaller inner diameter and a thicker wall.

It is apparent, from this figure, that the torque is reduced for the pile constructed in accordance with the second embodiment.

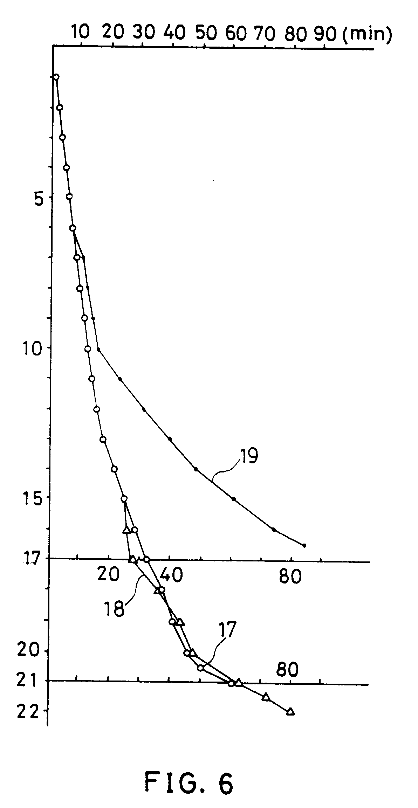

Fig. 6 illustrates the relationship between the length of the inner projection 14 and the penetration speed.

Lines 17 and 18 in the figure are in respect of the piles giving rise to the lines 15 and 16 of figure 5 and line 19 is in respect of a pile similar to the pile associated with lines 15 and 17 except that the length of the projection 14 was reduced by one half to 1,500 mm. It is apparent that the length of the projection 14 can remarkably influence the penetration speed.

An aspect of the present invention provides a pile driving method employing a hollow steel pile and an internal excavation process. A helical auger is inserted into the hollow interior of the steel pile and the pile is settled down by its own weight and a press-in device while excavation and soil discharging are being carried out by the auger head. Upon reaching the bottom, the required length of the pile is screwed into the desired stratum. In this way a high frictional resistance is generated between the soil column which has penetrated the pile and is enclosed and restricted thereby and the inner wall surface of the pile by means of the screw-like projection and a bearing force which is approximate to that obtained with a monkey direct driving pile is realized.

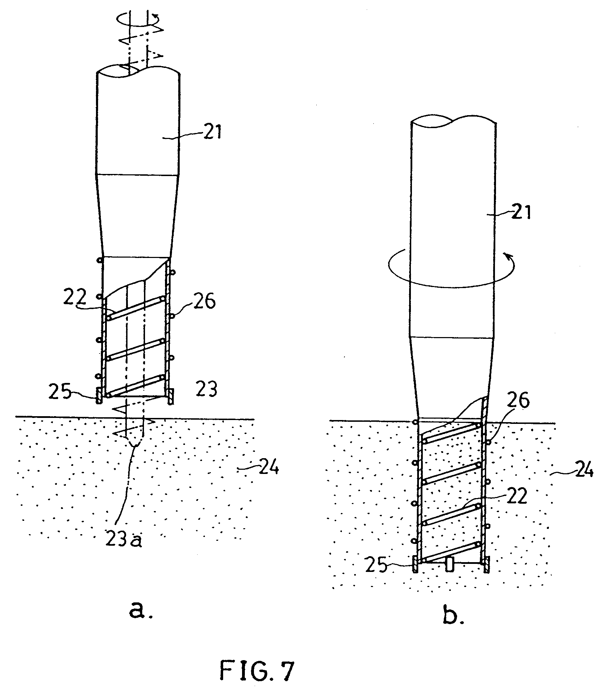

Figs. 7a and 7b illustrate a process of screwing and excavating a hollow steel pile in accordance with this aspect of the present invention where internal excavation is effected.

As is clearly shown in Fig. 7 a hollow steel pile 21 has a helical projection 22 on the inner wall of the extremity of the pile. The helical projection 22 consists of an iron bar normally welded to the pile surface in helical form. As another method for producing the projection, it may be provided at the stage of plate rolling. A helical auger 23 is inserted into the interior of the hollow steel pile 21 and is settled down by the weight of the pile itself and by a press-in device while being excavated down to the desired stratum 24, which acts as a bearing layer, by head 23a of the auger. (Fig. 7a)

In the drawing, reference numeral 25 denotes a friction cutter and reference numeral 26 denotes a helical projection arranged on the outer surface of the pile. Although the hollow steel pile 21 shown in the drawing has a stepped form wherein a cylindrical part of larger diameter communicates with a cylindrical part having a smaller diameter via a converging part, the pile may be of the type which includes a cylindrical part of constant diameter.

After settlement (shown in Fig. 7a) the pile 21 is screwed into, and penetrates, the bearing stratum 24 to a desired length using the auger drilling machine. (Fig. 7b).

The screw effect of the inner part of the pile and the penetrating mechanism will now be described. In order to insert the pile to the desired depth, it is necessary that the soil at the extremity of the pile smoothly penetrates into the hollow interior of the pile.

The soil entering the pile from the extremity is pushed up in succession by the load at the extremity of the pile and the screw thrusting force in the pile.

The pile is rotated at a rate which is faster than that corresponding to the screw pitch and penetration speed and thus the extremity exhibits a sliding movement and the soil in the pile transmits a torque from its extremity end so as to generate a relative speed between the pile and the soil in the pile. The pile thus penetrates into the soil while being rotated. The soil column in the pile exhibits dynamic frictional resistance at the surface of the pile as the pile is rotated and is pushed up by the screw thrusting force. A load is generated at the pile extremity as the pile is rotated.

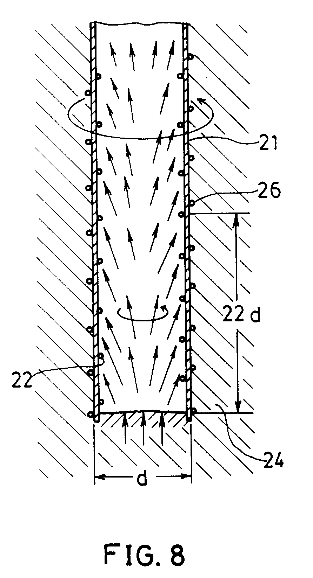

In Fig. 8 the above-mentioned in-pile penetration mechanism is illustrated. As the load at the extremity of the pile is increased, the transmittance torque is also increased and at the same time the resistance of the inner wall at the extremity of the pile is increased so that the increasing load at the extremity of the pile does not effectively act against the penetration of the soil into the pipe.

Thus, a torque should be transmitted to the soil column in the pile under a certain proper load at the extremity to penetrate the pile into the soil.

The helical projection in the pile generally extends over a length which is at least more than twice the outer diameter d on which the load at the extremity of the pile acts so as to increase that load.

The helical projection arranged on the outer surface of the pile may cut the ground so as to excavate upwardly the stratum at the outer circumference of the pile. The presence of this projection, which may be formed of iron rod, along a certain length of the pile at the extremity thereof enables the torque needed for penetration to be decreased and, after penetration, it may increase the friction resistance force between the bearing layer and the outer circumference of the pile and enable the desired bearing force to be achieved.

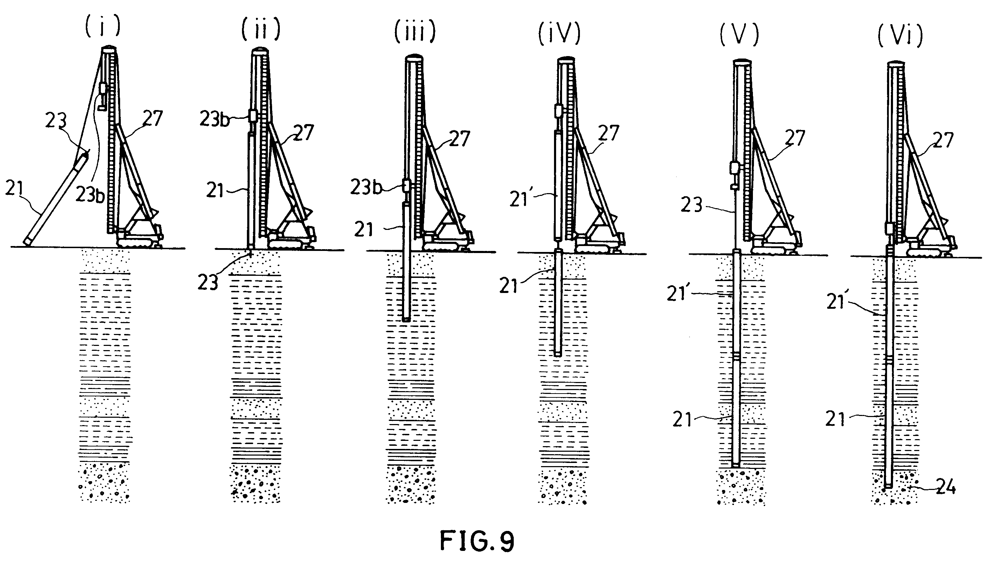

In Fig. 9, the steps involved in inserting the pile are described.
(i) The helical auger 23 is inserted in advance into the hollow interior of the pile 21 and assembled in the pile driving machine 27.
(ii) The helical auger 23 is connected to auger driving device 23b, its vertical orientation is assured and then the excavation is started.
(iii) The helical auger 23 is rotated and the pile 21 is settled down while the stratum adjacent the extremity of the pile is being excavated.
(iv) The pile 21 is settled down to a position where coupling welding work will not be hindered. After a further pile 21', having a helical auger 23 inserted therein, is assembled in the same manner as in (i) above and the upper and lower helical augers have been connected to each other, the piles are welded together in such a way that their axes lie along a straight line.
(v) The piles are settled down to the desired depth and then the helical auger is rotated in the opposite direction and pulled up.
(vi) After pulling out the helical auger, the pile 21 and the auger driving device 23b are connected to each other, rotated and pressed in to the bearing stratum 24 and the foundation is consolidated to achieve the bearing force.

In the case where the intermediate sand layer N in the stratum is not thick, the intermediate excavation processes of steps (i) to (v) may be eliminated and the pile and the auger driving device may be connected initially, rotated and pressed in.

A feature of the above-described arrangement consists in the fact that a hollow steel pile having a helical projection provided on its inner wall at the extremity of the pile is screwed into the ground so as to penetrate it. With this arrangement, a higher frictional resistance which is different from that at the outside part of the pile is generated between the pile and the penetrated soil enclosed and restricted within the pile and at the same time the penetration is increased. Comparison tests have been performed.

Experiments involving the insertion of a pile having a size of 400 ⌀ x 22 m were carried out. In case (i), the pile had a screw projection welded to its inner wall at its extremity. The projection was formed of iron rod of 13 ⌀ and had a pitch of 400. In case (2) there was no inner wall screw projection. In each case, the pile had a screw projection welded to its outer wall at its extremity. This projection was also formed of iron rod of 13 ⌀ and had a pitch of 400. The results are shown in the following table:

| | 1 | 2 |
|---|---|---|
| Required Torque | 4.5^{t-m} | 4.5^{t-m} |
| Penetration Depth | 16 m | 16 m |
| Penetration Time | 40 min | 60 min |

As described above, it is apparent that the penetration time can be shortened by the presence of a helical projection on the inner wall.

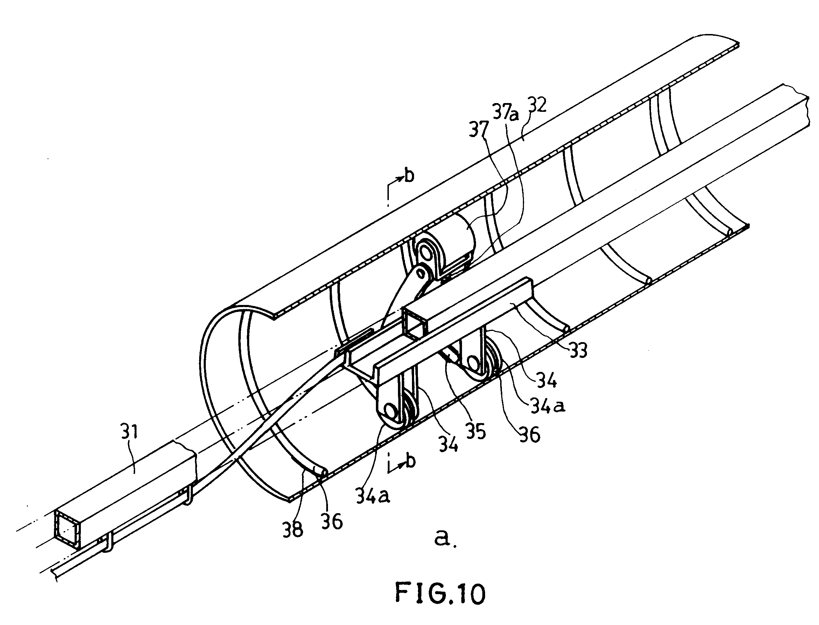

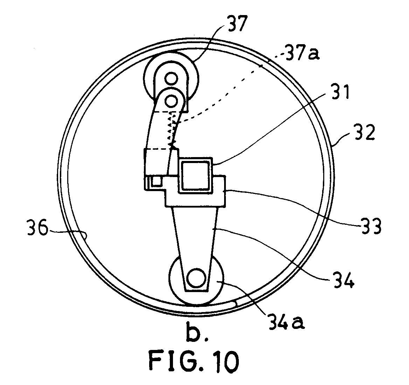

Referring now to Figs. 10a and 10b, there is shown a device for applying the helical projection to the inner surface of the hollow pile. In these Figures, reference numeral 31 designates a guide bar inserted into an extremity of a pile in the form of a machined and preformed steel pipe 32. The guide bar 31 is composed of a rectangular steel pipe or the like and projects from a fixed supporting table (not shown). To this guide bar is assembled a fixing base frame 33 which can be axially slid along the guide bar 31 without being rotatable in an axial circumferential direction.

The fixing base frame 33 is provided with a plurality of suspending legs 34 having a desired spacing (a helical pitch) in the axial direction, and the ends of the suspending legs 34 are provided with grooved rollers 34a for holding the helical rod member.

A torch 35 extends from the fixing base frame 33 and is directed near the preceding roller 34a so as to press on, and set the position of, a helical rod member 36 to be welded to the inner circumferential surface of the pipe.

At the upper side of the fixing base frame 33, there is provided a pressing roller 37 abutting against the inner surface of the steel pipe 32 and having a pressurizing mechanism such as a spring 37a installed so as to press the roller 34a against the inner surface of the steel pipe 32.

The round or rectangular rod member 36 formed in a helical form in advance, is inserted into the extremity of the already-formed steel pipe 32. At an open end of the pipe 32, where the operator may manually reach, the member 36 is welded to the inner surface of the pipe 32 at 38 for temporarily fixing it there. The steel pipe 32 is mounted for rotation on a turning roller or the like (not shown).

The above-mentioned device is inserted into the extremity of the steel pipe 32 maintained in the above condition so that the rollers 34a hold the helical member 36 and the pressing roller 37 is abutted against the inner surface of the steel pipe 32.

Thus, the preceding roller 34a holds the helical member 36 to be welded at a desired helical pitch position in relation to the roller 34a holding the helical member 36 temporarily fixed to the open end of the pipe. As the steel pipe 32 is rotated, the member 36 is welded to the pipe by the torch 35 at once. The fixing base frame 33 is relatively advanced into the steel pipe 32 so as to complete automatically the formation of the helical projection on the inner surface of the extremity of the pipe over a desired length.

Since the torch 35 is required to be compact in size, it is preferable not to provide any flux supplying device and the like, i.e. to use a flux cored wire.

The welding position of the torch 35 is directed downwardly as described above and fixed, and enables a stable welding to be made. As for the pressing roller 37, it must be considered that a uniform pressing pressure needs to be maintained against the group of rollers 34a and the helical member 36 may not act as an obstacle. Thus, a symmetrical arrangement of pressing rollers or a plurality of pressing rollers should be used.

The above-described device is operated such that the helical rod member which is formed in a helical form in advance is inserted into the extremity of the pipe and only the open end part, which can be manually reached, is welded by a manual operation and fixed. The device is then inserted into the extremity of the already formed steel pipe installed on a rotary mechanism. The helical rod member pushed against the inner surface of the steel pipe by the holding rollers as a consequence of the pushing force of the pressing rollers is welded in sequence by the torch as the steel pipe is rotated.

Using the device, an iron rod member of 13 ⌀ was welded to the inner wall of a pipe over a length of 3000 mm from the extremity. The pipe had an inner diameter of 300 ⌀ and a length of 15 m and the welding was performed without any problem and was of good quality.

## Claims

1. A hollow steel pile (1), (11'), (21), (21') having open ends and including a helical projection (2), (13), (26) formed of a round or rectangular rod member (36) arranged as a helical band on the outer surface of the pile characterised in that the projection has a height of 20mm or less and is provided only over a part of the pile which is less than 10 times the outer diameter of the pile from the pile extremity.

2. A hollow steel pile as claimed in claim 1, in which the inner diameter of the pile is reduced and the wall thickness of the pile is increased over a length of the pile adjacent the pile extremity.

3. A hollow steel pile as claimed in claim 1 or 2, wherein saw-teeth (5) and/or a cutting tool (6), (25) are arranged at the pile extremity.

4. A hollow steel pile as claimed in any preceding claim, and including a helical projection (3), (14), (22) formed of a round or rectangular rod member (36) arranged as a helical band on the inner surface of the pile, the projection having a height of less than 20 mm and being provided over a part of the pile adjacent the pile extremity.

5. A hollow steel pile claimed in claim 4, wherein the part of the pile over which the helical projection arranged on the inner surface extends is less than 10 times the outer diameter of the pile from the pile extremity.

6. A hollow steel pile as claimed in claim 4 or 5 wherein the part of the pile over which the inner helical projection extends is at least twice the outer diameter of the pile.

7. A hollow steel pile as claimed in claim 6 wherein the part of the pile over which the inner helical projection extends is more than 5 times the outer diameter of the pile.

8. A method of manufacturing a pile having a helical projection on its outer surface and a helical projection on its inner surface as claimed in any one of claims 4 to 7, wherein the helical projection on the inner surface is formed by mounting a hollow steel pipe (32) so as to be rotatable about its longitudinal axis, inserting and temporarily fixing the rod member (36) preformed in a helical shape into the pipe at the extremity thereof, rotating the pipe while pressing said rod member against the inner surface of the pipe, advancing a welding torch (35) along the helical rod member and welding the helical rod member to said inner surface to form said helical projection on the inner surface.

9. A device for forming the helical projection on the inner surface of the pile when manufacturing a pile having a helical projection on its inner surface and a helical projection on its outer surface by the method of claim 8, which device comprises a guide bar (31) for insertion along the axis of the steel pipe (32), a base frame (33) guided by, and axially displaceable along, said guide bar, a plurality of legs (34) extending from said base frame and axially spaced by a distance corresponding to the helical pitch of the rod member (36), a grooved roller (34a) located at the end of each leg for engaging with the rod member and urging it against the inner surface of the pipe, a welding torch (35) adjacent the preceding grooved roller (34a) and directed toward the inner surface of the pipe, and a pressing roller (37) extending from said base frame and abutting against the inner surface of the pipe to press the grooved roller (34a) against the rod member to urge it against the inner surface of the pipe and form the helical projection on the inner surface.

10. A method of driving a hollow steel pile as claimed in any one of claims 1 to 7 wherein the pile is pressed into the ground down to a bearing stratum layer (24) and then said pile is screwed into the bearing layer.

11. A method of driving a hollow steel pile as claimed in any one of claims 1 to 7 wherein a helical auger (23) is inserted into the interior of said pile, said pile is pressed into the ground down to a bearing stratum layer (24) while soil is being discharged from the pile by the auger, and then said pile is screwed into the bearing layer.

## Patentansprüche

1. Hohler Stahlpfahl (1) , (11'), (21), (21') mit offenen Enden und mit einem schraubenlinienförmigen Vorsprung (2), (13), (26), welcher aus einem runden oder rechteckförmigen Stabelement (36), das als schraubenlinienförmiges Band an der äußeren Oberfläche des Pfahles angeordnet ist, gebildet ist, dadurch gekennzeichnet, daß der Vorsprung eine Höhe von 20 mm oder weniger aufweist und lediglich über einen Teil des Pfahles vorgesehen ist, der geringer als 10x dem Außendurchmesser des Pfahles von dem unteren Pfahlende aus ist.

2. Hohler Stahlpfahl nach Anspruch 1, bei dem der Innendurchmesser des Pfahles verringert ist und bei dem die Wanddicke des Pfahles über eine an das untere Pfahlende angrenzende Länge des Pfahles vergrößert ist.

3. Hohler Stahlpfahl nach Anspruch 1 oder 2, wobei Sägezähne (5) und/oder ein Schneidwerkzeug (6), (25) an dem unteren Prahlende vorgesehen sind.

4. Hohler Stahlpfahl nach einem der vorhergehenden Ansprüche und mit einem schraubenlinienförmigen Vorsprung (3), (14), (22), welcher aus einem runden oder rechteckförmigen Stabelement (36), das als schraubenlinienförmiges Band an der inneren Oberfläche des Pfahles angeordnet ist, gebildet ist, wobei der Vorsprung eine Höhe von weniger als 20 mm aufweist und über einen an das Pfahlende angrenzenden Teil des Pfahles vorgesehen ist.

5. Hohler Stahlpfahl nach Anspruch 4, wobei der Teil des Pfahles, über den sich der an der inneren Oberfläche angeordnete schraubenlinlenförmige Vorsprung erstreckt, geringer als 10x dem Außendurchmesser des Pfahles von dem Pfahlende ist.

6. Hohler Stahlpfahl nach Anspruch 4 oder 5, wobei der Teil des Pfahles, über den sich der innere schraubenlinienförmige Vorsprung erstreckt, wenigstens 2x dem äußeren Durchmesser des Pfahles beträgt.

7. Hohler Stahlpfahl nach Anspruch 6, wobei der Teil des Pfahles, über den sich der innere schraubenlinienförmige Vorsprung erstreckt, mehr als 5x dem Außendurchmesser des Pfahles beträgt.

8. Verfahren zur Herstellung eines Pfahles mit einem schraubenlinienförmigen Vorsprung an seiner äußeren Oberfläche und einem schraubenlinienförmigen Vorsprung an seiner inneren Oberfläche nach einem der Ansprüche 4 bis 7, wobei der schraubenlinienförmige Vorsprung auf der inneren Oberfläche gebildet wird durch Befestigen eines hohlen Stahlrohres (32) derart, daß es um seine Längsachse drehbar ist, durch Einsetzen und zeitweiliges Befestigen des in Schraubenlinienform vorgeformten Stabelementes (36) in das Rohr an dessen Ende, durch Drehen des Rohres, während das Stabelement gegen die innere Oberfläche des Rohres gepreßt wird, durch Vorwärtsbewegen eines Schweißbrenners (35) entlang dem schraubenlinienförmigen Stabelement und durch Schweißen des schraubenlinienförmigen Stabelementes an die innere Oberfläche, um den schraubenlinienförmigen Vorsprung an der inneren Oberfläche auszubilden.

9. Vorrichtung zur Ausbildung des schraubenlinienförmigen Vorsprungs auf der inneren Oberfläche des Pfahles bei der Herstellung eines Pfahles mit einem schraubenlinienförmigen Vorsprung an seiner inneren Oberfläche und einem schraubenlinienförmigen Vorsprung an seiner äußeren Oberfläche mittels des Verfahrens nach Anspruch 8, wobei die Vorrichtung eine Führungsschiene (31) zur Einführung entlang der Achse des Stahlrohres (32) aufweist, einen Basisrahmen (33), der von der Führungsschiene geführt wird und axial entlang dieser verschiebbar ist, eine Vielzahl von Beinen (34), die sich von dem Basisrahmen erstrecken und axial um einen der Schraubensteigung des Stabelementes (36) entsprechenden Abstand voneinander angeordnet sind, eine geriefelte Walze (34a), die an dem Ende jedes Beines angeordnet ist, um mit dem Stabelement in Eingriff zu treten und dieses gegen die innere Oberfläche des Rohres zu drücken, einen Schweißbrenner (35), der an die vorhergehende geriefelte Walze (34a) angrenzt und zur inneren Oberfläche des Rohres hin gerichtet ist, und eine Preßwalze (37), die sich von dem Basisrahmen erstreckt und gegen die innere Oberfläche des Rohres anliegt, um die geriefelte Walze (34a) gegen das Stabelement zu pressen, um dieses gegen die innere Oberfläche des Rohres zu drücken und den schraubenlinienförmigen Vorsprung an der inneren Oberfläche zu bilden.

10. Verfahren zum Eintreiben eines hohlen Stahlpfahles nach einem der Ansprüche 1 bis 7, wobei der Pfahl bis zu einer haltgebenden Stratumschicht (24) in den Boden eingepreßt und wobei dann der Pfahl in die haltgebende Schicht eingeschraubt wird.

11. Verfahren zum Eintreiben eines hohlen Stahlpfahles nach einem der Ansprüche 1 bis 7, wobei ein schraubenlinienförmiger Stangenbohrer (23) in das Innere des Pfahles eingesetzt wird, wobei der Pfahl in den Boden bis zu einer haltgebenden Stratumschicht (24) eingepreßt wird, während Erdreich durch den Bohrer von dem Pfahl entfernt wird, und wobei dann der Pfahl in die haltgebende Schicht eingeschraubt wird.

## Revendications

1. Un pieu creux en acier (1), (11), (21), (21') présentant des extrémités ouvertes et incluant une saillie hélicoïdale (2), (13), (26) formée d'un organe en barre, rectangulaire ou rond (36) disposé en tant que bande hélicoïdale sur la surface externe du pieu, caractérisé en ce que la saillie a une hauteur de 20 mm ou moins et est disposée seulement sur une partie du pieu qui est inférieure à dix fois le diamètre extérieur du pieu à partir de l'extrémité du pieu.

2. Un pieu creux en acier, comme revendiqué à la revendication 1, dans lequel le diamètre interne du pieu est réduit et l'épaisseur de la paroi du pieu est augmentée sur une longueur du pieu contigue à l'extrémité du pieu.

3. Un pieu creux en acier, comme revendiqué à la revendication 1 ou 2, dans lequel des dents de scie (5) et/ou un outil de coupe (6), (25) sont disposés à l'extrémité du pieu.

4. Un pieu creux en acier, comme revendiqué à l'une quelconque des revendications précédentes et comportant une saillie hélicoïdale (3), (14), (22) formée d'un organe en barre, rectangulaire ou rond (36) disposé en tant que bande hélicoïdale sur la surface interne du pieu, la saillie présentant une hauteur inférieure à 20 mm et étant disposée sur une partie du plein contigue à l'extrémité du pieu.

5. Un pieu creux en acier revendiqué à la revendication 4, dans lequel la partie du pieu sur laquelle s'étend la saillie hélicoïdale disposée sur la surface interne est inférieure à dix fois le diamètre extérieur du plein à partir de l'extrémité du pieu.

6. Un pieu creux en acier, comme revendiqué à la revendication 4 ou 5, dans lequel la partie du pieu sur laquelle s'étend la saillie hélicoïdale interne est égale à au moins deux fois le diamètre externe du pieu.

7. Un pieu creux en acier, comme revendiqué à la revendication 6, dans lequel la partie du pieu sur laquelle s'étend la saillie hélicoïdale interne est supérieure à cinq fois le diamètre externe du pieu.

8. Un procédé de fabrication d'un pieu présentant une saillie hélicoïdale sur sa surface externe et une saillie hélicoïdale sur sa surface interne, comme revendiqué à l'une quelconque des revendications 4 à 7, dans lequel la saillie hélicoïdale sur la surface interne est formée en montant un tube d'acier creux (32) de manière à être rotatif autour de son axe longitudinal, en insérant et en fixant temporairement l'organe en barre (36) préformé de manière hélicoïdale dans le tube à son extrémité, en tournant le tube tout en pressant ledit organe en barre contre la surface interne du tube, en avançant un chalumeau de soudage (35) le long de l'organe en barre hélicoïdale et en soudant l'organe en barre hélicoïdale à ladite surface interne pour former ladite saillie hélicoïdale sur la surface interne.

9. Un dispositif pour former la saillie hélicoïdale sur la surface interne du pieu pendant la fabrication d'un pieu présentant une saillie hélicoïdale sur sa surface interne et une saillie hélicoïdale sur sa surface externe par le procédé de la revendication 8, ce dispositif comprenant une barre de guidage (31) pour l'insertion le long de l'axe du tube d'acier (32), un cadre de base (33) guidé par ladite barre de guidage et mobile axialement le long de celle-ci, un ensemble de bras (34) s'étendant dudit cadre de base et espacé axialement d'une distance correspondant au pas hélicoïdal de l'organe en barre (36), un galet rainuré (34a) disposé à l'extrémité de chaque bras pour s'engager avec l'organe en barre et le pousser contre la surface interne du tube, un chalumeau de soudure (35) contigu au galet rainuré précédent (34a) et dirigé vers la surface interne du tube, et un galet presseur (37) s'étendant depuis ledit cadre de base et venant en butée contre la surface interne du tube pour presser le galet rainuré (34a) contre l'organe en barre pour le pousser contre la surface interne du tube et former la saillie hélicoïdale sur la surface interne.

10. Un procédé d'enfoncement d'un pieu creux en acier comme revendiqué dans l'une quelconque des revendications 1 à 7, dans lequel le pieu est enfoncé dans le sol jusqu'à une couche de strate portante (24), et ensuite ledit pieu est vissé dans la couche portante.

11. Un procédé d'enfoncement d'un pieu creux en acier, comme revendiqué dans l'une quelconque des revendications 1 à 7, dans lequel un foret hélicoïdal (23) est inséré à l'intérieur dudit pieu, ledit pieu est enfoncé dans le sol jusqu'à une couche de strate portante (24) quand la terre est évacuée du pieu par le foret, et ensuite ledit pieu est vissé dans la couche portante.
